# EUROPÄISCHE PATENTSCHRIFT

(11) **EP 2 751 311 B1**
(45) Veröffentlichungstag und Bekanntmachung des Hinweises auf die Patenterteilung: **22.08.2018**
(21) Anmeldenummer: 12753144.0
(22) Anmeldetag: 03.09.2012
(51) Int. Cl.: D01D 5/06, D01F 2/00, C08J 3/09, C08J 5/18

(54) **EXTRUSIONSVERFAHREN**
EXTRUSION METHOD
PROCÉDÉ D'EXTRUSION

(30) Priorität: 02.09.2011 EP 11179844
(43) Veröffentlichungstag der Anmeldung: 09.07.2014
(73) Patentinhaber: Aurotec GmbH, 4840 Vöcklabruck (AT)
(72) Erfinder: ZIKELI, Stefan, A-4844 Regau (AT); ECKER, Friedrich, A-4850 Timelkam (AT)
(74) Vertreter: Sonn & Partner Patentanwälte
(86) Internationale Anmeldenummer: PCT/EP2012/067077
(87) Internationale Veröffentlichungsnummer: WO 2013/030399

(56) Entgegenhaltungen:
- EP-A1- 1 657 327
- DE-A1- 10 043 297
- US-A- 5 417 909
- US-A- 5 951 932
- US-A1- 2005 220 916

## Beschreibung

Die vorliegende Erfindung betrifft Extrusionsmethoden, insbesondere zum Formen von Polymerlösungen oder -fluiden.

Celluose und andere Polymere können in geeigneten Lösungsmitteln gelöst werden und durch kontrolliertes Verfestigen in einen gewünschten Formkörper überführt werden. Wenn es sich bei diesem Formkörper um Fäden, Fibrillen und dgl. handelt, spricht man auch von einem Spinnprozess. Zellulose wird beispielsweise in wässrigen Lösungen von Aminoxiden, insbesondere von Lösungen von N-Methyl-Morpholin-N-oxid (NMMO) gelöst, um aus der erhaltenen Spinnlösung Spinnprodukte wie zum Beispiel Filamente, Stapelfaser, Folien, etc. herzustellen. Dies geschieht durch Ausfällen der Extrudate im Wasser oder verdünnten Aminoxidlösungen nachdem die Extrudate des Extrusionswerkzeugs über einen Luftspalt in das Fällbad geführt werden.

Die US 4, 416, 698 betrifft ein Extrusions- bzw. Spinnverfahren für Zellulose-Lösungen um Zellulose zu Fäden zu formen. Hierbei wird ein fluides Spinnmaterial - einer Lösung von Zellulose und NMMO (N-Methyl-Morpholin-N-oxid) oder anderen tertiären Aminen - durch Extrusion geformt und in ein Fällbad zur Verfestigung und Ausdehnung gebracht. Dieses Verfahren ist auch als "Lyocell"-Verfahren bekannt.

Die US 4,246,221 und die DE 2913589 beschreiben Verfahren zur Herstellung von Zellulosefilamenten oder -folien, wobei die Zellulose in fluider Form verstreckt wird. Darin wird ein Spinnprozess beschrieben, in welchem Zellulose in tertiärem Aminoxid gelöst wird, wobei die erhaltene Zelluloselösung über ein Düsenwerkzeug gedrückt wird, über einen Luftspalt in einen Spinntrichter extrudiert wird und am Ende des Spinntrichters als Endlosfaden abgezogen wird. Der eingesetzte Spinntrichter ist mit einem Zuführmittel und einem Abführmittel für das Spinnbad ausgestattet.

Ein weiteres Verfahren wird in der US 5,252,284 beschrieben, in der längliche Formkapillaren zur Formung einer Zellulosemasse zum Einsatz kommen.

Die WO 93/19230 A1 beschreibt eine Weiterentwicklung des Lyocell-Verfahrens, bei dem das Zellulose-haltige Spinnmaterial unmittelbar nach dem Formen vor Einbringung in das Fällbad gekühlt wird.

Die WO 94/28218 A1 beschreibt ein Verfahren zur Herstellung von Zellulosefilamenten, bei dem eine Zelluloselösung über eine Düse zu mehreren Strängen geformt wird. Diese Stränge werden durch einen gasumströmten Spalt in ein Fällbad ("Spinnbad") gebracht und kontinuierlich ausgetragen.

In der WO 03/057951 A1 wird eine Formungsvorrichtung und eine weitere Variante des Lyocell-Verfahrens beschrieben, wobei das Zellulose-haltige Spinnmaterial nach Formung über einen Abschirmbereich und anschließend über einen Kühlbereich geleitet wird.

In der EP 0 430 926 B1 wird eine Spinndüse mit einem Spinndüsenkopf und einer Spinnplatte dargestellt, wobei die Spinnplatte aus einer stabilen Trägerplatte besteht, die mit Bohrungen versehen ist. In die zuvor genannten Bohrungen werden Düsenplättchen, in denen Spinnkapillaren angebracht sind, eingesetzt.

US 5,951,932 A betrifft ein Verfahren zur Herstellung von Lyocellfasern mit den bekannten Schritten der Extrusion der Zellulosefasern, Passage eines Luftspalts mit einem Luftstrom und Einbringen in ein Fällbad. Als mögliche Temperatur in der Spinnzelle wird ein Bereich von 95 °C bis 125 °C genannt. Der Extrusionsdruck mancher Ausführungsformen soll zwischen 20 und 100 bar liegen. Ein Druckunterschied der Spinnmasse zum Druck im Luftspalt wird nicht beschrieben. Zudem fehlt jede Information bei welchem Druck mit welcher Temperatur extrudiert wird.

US 5,417,909 A ist ein weiteres Dokument, das ein Lyocellverfahren beschreibt. In den Beispielen 6 bis 12 werden Temperaturen zwischen 70 °C und 115 °C genannt. Niedrigere Spinntemperaturen sollen ein besseres Spinnverhalten zeigen. Druckangaben fehlen.

US 2005/220916 A1 beschreibt ein Lyocell-Spinnverfahren mit Spinntemperaturen zwischen 80 °C und 102 °C. Abermals sind keine Druckangaben vorhanden.

DE 100 43 297 A1 nennt eine Spinntemperatur von 85 °C, abermals ohne Druckangabe.

In der Publikation "The Temperature of Fibres during Air-Gap Wet Spinning: Cooling by Convection and Evaporation" - Volker Simon (Int. J. Heat Mass Transfer. Vol. 37, No. 7, pp. 1133 - 1142, 1994) werden Abläufe im Spinnprozess dargestellt. Es wird ausgeführt, dass die in den Luftspalt zugeführte Polymermasse Wasser enthält und dass das Wasser während des Spinnprozesses an der Oberfläche des Spinnfadens verdampft und diese Wasserverdampfung eine Kühlwirkung auf den Spinnfaden ausübt. Es wird der Schluss gezogen, dass die Fasertemperatur während der Extrusion relativ hoch ist und durch die Verdampfung des Wassers von der Faser die Wasserkonzentration in der Spinnumgebung erhöht ist.

Als Ergebnis wird angeführt, dass der Wasserdampf-Gradient dazu führt, dass der Wasserdampf-Massenstrom von der Faser in Richtung der Umgebung geleitet wird. Die im Filament stattfindende Wasserverdampfung wird durch die im Filament befindliche Wärmemenge ermöglicht, wodurch eine starke Abkühlung, mehr als beim Schmelzspinnen, erfolgt. In einer weiteren Feststellung wird dargestellt, dass die im NMMO-Verfahren eingesetzte Spinnmasse aus einem Non-Solvent (Wasser) einem Solvent (Aminoxid = NMMO) sowie Zellulose besteht. Der Autor kommt letztendlich zum Schluss, dass das Lösungsmittel während des Formgebungsprozesses nicht verdampft.

Erfindungsgemäß wurde festgestellt, dass die Extrusion und anschließende Kühlung zu unerwünschten Partikelbildung und Ablagerungen an den Extrusionsöffnungen oder zu Verunreinigungen der einzelnen Spinnfäden führen kann. So können sich beispielsweise einzelne Bestandteile der Formmasse als feste Partikel unmittelbar nach Extrusion und Kühlung aus den noch fluiden Spinnfäden herauslösen und die Apparatur oder die Qualität des Produktes beeinträchtigen. Der vorliegenden Erfindung liegt die Aufgabe zugrunde verbesserte Extrusions- oder Spinnverfahren) zur Verfügung zu stellen, die diese Nachteile vermeiden können.

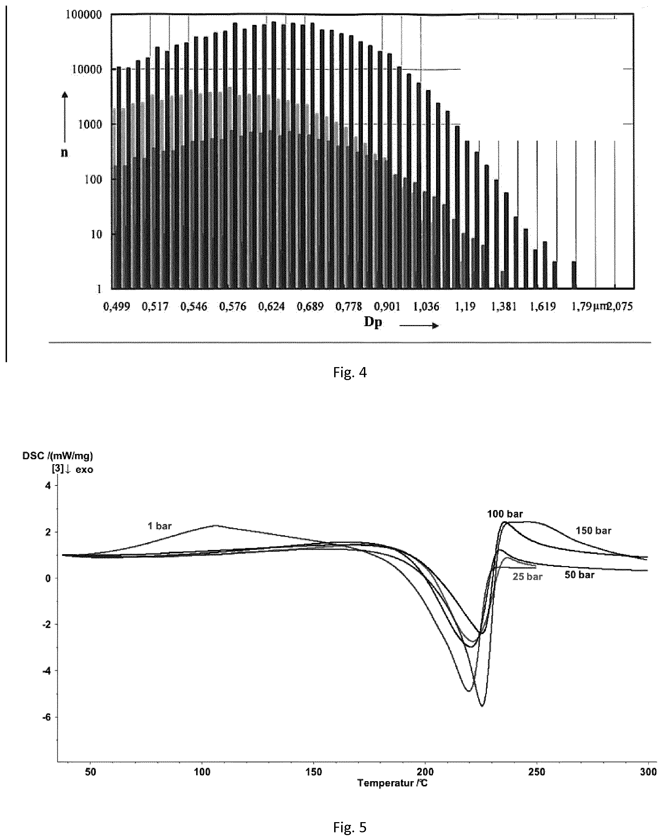

Die vorliegende Erfindung liefert daher ein Verfahren zur Herstellung von festen Zelluloseformkörpern, insbesondere-Filamenten, Stapelfasern, Folien oder Vliesen, aus einer Lösung von Zellulose, NMMO (N-Methyl-Morpholin-N-oxid) und Wasser, durch Extrudieren der Lösung durch eine oder mehrere Extrusionsöffnungen unter Druck und Verfestigen der Formkörper, insbesondere Filamente, Stapelfasern, Vliesen oder Folien, in einem Auffangbad, wobei die Lösung zwischen den Extrusionsöffnungen und dem Auffangbad durch einen Luftspalt geführt wird, wobei die Temperatur der Extrusionslösung an den Extrusionsöffnungen unter 105°C ist und der Druckunterschied zwischen dem Druck der Spinnlösung unmittelbar vor der Extrusion und nach Extrusion (insbesondere im Luftspalt) zwischen 8 und 40 bar ist. Erfindungsgemäß wurde erkannt, dass beim Extrudieren bzw. Spinnen von Zelluloseformkörpern im Luftspalt nicht bloß Wasser vom geformten Fluid abgesondert wird, sondern Partikel aus NMMO (N-Methylmorpholin- N- Oxid), sowie den NMMO-Abbauprodukten NMM (N-Methylmorpholin) und M (Morpholin), gebildet werden. Diese aus dem Polymerstrom austretenden Partikel wirken sich schädlich auf das Spinnverfahren aus und bewirken nicht bloß nur eine Schädigung der Formkörperoberfläche sondern auch ein Verkleben der Extrusionsöffnungen und beeinträchtigen die Spinnfäden während des Spinnverfahrens selbst, wobei es zu Spinnfehlern, Fadenverklebungen und -abrissen führen kann. Erfindungsgemäß wurde erkannt, dass bei einer Verarbeitungstemperatur der Polymerlösung von 105°C bis 110°C die Partikelbildung sowie deren Abscheidung aus dem Extrudat am stärksten ausgeprägt ist. Daher wird erfindungsgemäß bei niedrigeren Temperaturen die Spinnlösung extrudiert. Durch die Wahl niedrigerer Temperaturen werden die Umstrukturierungen in der Spinnlösung während der Extrusion, welche zur Partikelbildung führt und beispielsweise durch die Enthalpie festgestellt werden können (Fig. 5), vermindert. Dieser Prozess ist zudem beim Übergang der Spinnlösung von hohen Drücken vor der Extrusion zu niederen Drücken nach der Extrusion im Luftspalt besonders ausgeprägt. Daher wird erfindungsgemäß bei geringeren Druckunterschieden, z.B. im Bereich von 8 bis 40 bar gearbeitet.

In vorzugsweisen Ausführungsformen ist die Temperatur der Lösung zwischen 80°C und 98°C, vorzugsweise zwischen 84°C und 96°C. Die Temperatur kann mindestens eine von 80°C, 81°C, 82°C, 83°C, 84°C, 85°C, 86°C, 87°C, 88°C, 89°C, 90°C sein. Vorzugsweise ist die Temperatur maximal eine von 104°C, 103°C, 102°C, 101°C, 100°C, 99°C, 98°C, 97°C, 96°C, 95°C, 94°C, 93°C, 92°C, 91°C, 90°C, 89°C, 88°C. Durch jede Temperaturreduktion kann die Partikelbildung reduziert und damit das Spinnverhalten verbessert werden.

Vorzugsweise ist der Druckunterschied zwischen 10 bar und 38 bar, insbesondere zwischen 13 bar und 35 bar. Im Speziellen kann der Druckunterschied mindestens 8 bar, 9 bar, 10 bar, 11 bar, 12 bar, 13 bar, 14 bar, 15 bar, 16 bar, 17 bar, 18 bar, 19 bar, 20 bar, 21 bar, 22 bar, 23 bar, 24 bar, 25 bar, 26 bar, 27 bar, 28 bar, 29 bar, 30 bar oder mehr betragen. Speziell bevorzugt werden geringe Druckunterschiede gewählt, wie z.B. von maximal 40 bar, 39 bar, 38 bar, 37 bar, 36 bar, 35 bar, 34 bar, 33 bar, 32 bar, 31 bar, 30 bar, 29 bar, 28 bar, 27 bar, 26 bar, 25 bar oder weniger.

Der Druck der Spinnlösung (-fluids) unmittelbar vor der Extrusion, z.B. einer den Extrusionsöffnungen vorgelagerten Extrusionskammer, kann in speziellen Ausführungsformen zwischen 13 und 50 bar sein, vorzugsweise zwischen 14 und 49 bar, zwischen 15 und 48 bar, zwischen 16 und 47 bar, zwischen 17 und 46 bar, zwischen 18 und 45 bar, zwischen 19 und 44 bar, zwischen 20 und 43 bar, zwischen 21 und 42 bar, zwischen 22 und 41 bar, zwischen 23 und 40 bar, zwischen 24 und 39 bar, zwischen 25 und 38 bar, zwischen 26 und 37 bar.

Der Druck nach der Extrusion, z.B. im Luftspalt, ist gewöhnlich bei Umgebungsdruck, kann aber auch bei Unterdruck oder Überdruck liegen. Vorzugsweise wird die Druckdifferenz so gewählt, dass die Unterschiede der Umformungsenthalpie der Zellulose/NMMO/Wasser-Lösung in Folge der Druckexpansion bei den Spinntemperaturen geringer ausfallen. Der Druck kann z.B. zwischen 0,1 bar und 10 bar liegen. Vorzugsweise ist der Druck nach Extrusion mindestens 0,5 bar, insbesondere bevorzugt mindestens 1 bar, 2 bar, 3 bar, 4 bar, 5 bar, 6 bar, 7 bar, 8 bar, 9 bar, 10 bar oder mehr. Der Druck kann hier in speziellen Ausführungsformen maximal 10 bar, 9 bar, 8 bar, 7 bar, 6 bar, 5 bar, 4 bar, 3 bar, 2 bar, 1,5 bar, 1 bar, oder weniger betragen. Ein derartiger Formungsprozess mit Überdruck im Luftspalt kann in einem Druckbehälter vorgenommen werden. In diesem Druckbehälter wird vorzugsweise der Formkörper diskontinuierlich produziert und nach einer bestimmten produzierten Menge unter Öffnung des Druckbehälters entfernt. Hierbei kann ebenfalls diskontinuierlich das Medium im Auffangbad, z.B. Wasser, ersetzt werden, in dem sich während des Spinnprozesses NMMO sowie die Zersetzungsprodukte ansammeln können. Bei zu hoher NMMO Konzentration im Auffangbad könnte das Verfestigen der Formkörper beeinträchtigt werden. Alternativ kann das Medium auch wie bei Normaldruckprozessen kontinuierlich durch Überdruck in den Druckbehälter ein- und ausgeführt werden.

In bevorzugten Ausführungsformen wird im Luftspalt ein seitlicher Gasstrom vorgesehen Der Gasstrom dient dem Austrag von, sich aus der Polymermasse (Zellulose/Aminoxid/Wasser) abscheidenden Partikel aus dem Spinnraum und eventuell auch der Abkühlung der Spinnfäden vor Eintritt in das Auffangbad (Spinnbad) in dem die Fäden durch Fällung des Polymers Zellulose letztlich verfestigt werden. Der Gasstrom kann zweifach oder mehrfach geteilt werden, in einzelne Teilströme, ev. durch Einströmen durch mehrere Düsenöffnungen. Einer oder mehrere Teilströme können beheizt (Heizteilstrom) oder gekühlt (Kühlteilstrom) werden. Zum effizienten Austrag der Partikel wird mindestens ein Heizteilstrom vorgesehen bei einer Temperatur von über der Schmelztemperatur der Partikel (NMMO in Form von angelagertem Hydratwasser), z.B. über 75°C. Der Heizteilstrom ist vorzugsweise angrenzend an die Extrusionsöffnungen, sodass die extrudierte Lösung zuerst den Heizteilstrom und dann die anderen (Kühl-)teilströme passiert, um insbesondere die Partikelanhaftung an der Extrusionsvorrichtung sowie die Kristallisation der Partikel zu vermeiden. Die Kristallisation der Partikel im Bereich der Extrusionsöffnungen würde dazu führen, dass die so entstandenen Festkörper (Partikel) den Verlauf des Spinnprozesses im Luftspalt negativ beeinflussen, sowie die entstehende Kristallisationswärme in den Extrusionsbereich eingeführt wird, was ebenfalls kontraproduktiv gegenüber einem optimalen Formgebungsprozess wirkt. Das Gas ist vorzugsweise Luft oder ein Inertgas, welches nicht mit der Spinnlösung oder den abgeschiedenen Partikel reagiert oder geeignet ist eine anfallende frei werdende Kristallisationsenthalpie abzuführen. Der Gasstrom kann durch ein Gebläse oder eine Gebläsevorrichtung, gegebenenfalls mit einer Stromführungseinrichtung, in den Luftspalt eingeleitet werden. Eine weitere Stromführungseinrichtung, kann auch dem kontrollierten Austrag des Gasstrom aus dem Spinnbereich oder Luftspalt dienen.

In vorzugsweisen Ausführungsformen der Erfindung wird daher aus der extrudierten Lösung eine oder mehrere die Zellulose lösungsvermittelnden Komponenten (wie NMMO) abgeschieden, vorzugsweise durch den seitlich zugeführten Gasstrom. Insbesondere können die durch den seitlich zugeführten Gasstrom abgeschiedenen Komponenten aus dem Spinnfeld abströmseitig ausgetragen werden. Bei den ausgetragenen Komponenten handelt es sich vorzugsweise um kristallisierbare Komponenten, insbesondere solche, welche bei Abkühlungsprozessen oder Druckänderungen im Luftspalt aus der Zellulose-Lösung auskristallisieren können.

Vorzugsweise beträgt der Gasstrom zwischen 30 bis 300 Liter/h Gas pro mm Länge des Bereichs der Extrusionsöffnungen in Gasstromrichtung oder zwischen 0,15 und 20 Liter/h Gas pro mm³ Spinnfeldvolumen im Luftspalt. Der Gasstrom kann in vorzugsweisen Ausführungsformen auch zwischen 40 bis 275 Liter/h, 50 bis 250 Liter/h, 60 bis 225 Liter/h, 70 bis 200 Liter/h, 80 bis 175 Liter/h, 90 bis 150 Liter/h, 100 bis 130 Liter/h Gas pro mm Länge des Bereichs der Extrusionsöffnungen in Gasstromrichtung betragen. Alternativ bemessen kann der Gasstrom vorzugsweise zwischen 0,15 und 20 Liter/h, zwischen 0,25 und 18 Liter/h, zwischen 0,4 und 16 Liter/h, zwischen 0,5 und 14 Liter/h oder zwischen 0,6 und 12 Liter/h Gas pro mm³ Spinnfeldvolumen betragen. Diese Gasströme sind entweder die Einzelströme von 2, 3, 4 ,5 oder 6 Teilströmen oder der Gesamtstrom durch den Luftspalt. Vorzugsweise wird der Bereich zwischen den Extrusionsöffnungen und dem Auffangbad im Wesentlichen vollständig durch den seitlichen Gasstrom gespült um entlang der gesamten Länge und Breite der Spinnfäden Partikel auszutragen. Vorzugsweise ist der seitliche Gasstrom laminar um Verwirbelungen zu vermeiden, welche die Partikel nur ineffizient austragen.

In Richtung des seitlichen Gasstroms können mehrere Extrusionsöffnungen vorgesehen werden, welche alle durch den Gasstrom nach einander umspült werden.

Wie bereits angemerkt ist es bevorzugt einen Teilstrom des seitlichen Gasstroms zu beheizen, vorzugsweise durch eine Extrusionsplatte mit den Extrusionsöffnungen und/oder durch ein Heizelement in einem Gebläse, um sich aus der Polymerlösulng (Zelluose/Aminoxid/Wasser) abscheidende Partikel an den Extrusionsöffnungen aus der Spinnlösung bzw. den gebildeten Fäden nach der Extrusion nicht auskristallisieren zu lassen und um Ablagerungen an den Extrusionsöffnungen oder an den Spinnfäden zu vermeiden. Diese Partikel sind in der Regel Kristallisationsprodukte oder Zerfallsprodukte, welche bei erhöhter Temperatur ausgetragen werden können um ein Ablagern und die Zuführung von Kristallisationswärme durch unmittelbare Kühlung zu vermeiden. Der Kühlteilstrom ist ein kühlender Teilstrom des Gases, z.B. bei Lufttemperatur. Vorzugsweise ist die Temperatur des Heizteilstroms über der Schmelztemperatur der erwarteten Partikel. Im Fall eines Spinnfluids von Zellulose-NMMO-Wasser, welches üblicherweise bei Temperaturen von 80°C bis 105°C extrudiert wird, werden Partikel aus NMMO-Hydrat erwartet. Der Heizteilstrom sollte daher eine Temperatur von mindestens 75°C aufweisen. Der Bereich des Kühlteilstroms und des Heizteilstroms grenzen unmittelbar aneinander an, sodass in Extrusionsrichtung die extrudierte Lösung keine wesentlichen Turbulenzen oder Unterschiede in der Gasstromgeschwindigkeit erfährt. Dadurch wird ein sanfter Übergang in den Kühlstrombereich erzielt, der Ablagerungen und das Herausbrechen verfestigter Partikel aus der Polymerlösung verhindert. Im Kühlteilstrom wird die Klebrigkeit der Lösung noch in der fluiden Phase zwischen den Extrusionsöffnungen und dem Auffangbad (einem "Fällbad" zur Verfestigung der Lösung) vermindert. Dieses Abkühlen soll jedoch nicht unmittelbar nach den Extrusionsöffnungen stattfinden, da sich gezeigt hat, dass dadurch Ablagerungen und Verstopfungen der Öffnungen auftreten können und wie sich erfindungsgemäß gezeigt hat, dass wenn unmittelbar gekühlt wird die aus der Polymermasse durch Expansionsverdampfung austretenden Lösungsmittelbestandteile kristallisieren könnten und zu einem unerwünschten Wärmeeintrag führen. Insbesondere hat sich gezeigt, dass sogar ein Beheizen in diesem Bereich vor den Öffnungen vorteilhaft ist. Es hat sich auch in den Versuchen gezeigt, dass eine gewisse Abdeckung oder Stromführungselement der Auffangbadoberfläche vorteilhaft ist, damit nicht über das Auffangbad Feuchtigkeit in das Spinnfeld eingetragen wird. Die Abdeckung kann in einem entsprechenden Winkel zur Extrusionsrichtung und Auffangbadoberfläche positioniert sein damit der Extrusionsprozess optimal gestaltet werden kann.

Der Heizteilstrom wird vorzugsweise bei heißen Temperaturen mit maximal 20°C, insbesondere bevorzugt maximal 10°C oder 5°C, Unterschied zur Temperatur der Lösung an den Extrusionsöffnungen vorbeigeführt. Die Temperatur des Kühlteilstroms ist vorzugsweise zwischen 0 und 50°C.

Die Ausführungsformen der vorliegenden Erfindung zeichnen sich im Speziellen durch einen kontrollierten Gasfluss durch den Bereich zwischen Extrusionsöffnung und Auffangbad aus. Durch kontrollierte Strömungseinleitung bilden sich einzelne Gasführungsbereiche, insbesondere der Heizteilstrom und der Kühlteilstrom. Die einzelnen Teilströme des Gasstroms, insbesondere der Heizteilstrom und der Kühlteilstrom, führen mit im Wesentlichen gleicher Geschwindigkeit an der extrudierten Polymerlösung vorbei. Die Extrusionsrichtung ist ungefähr normal zur Strömungsrichtung des Gases. Die Gasströmung wird nur von einer Seite auf die geformte Zellulose-Material beinhaltende Lösung zugeführt.

Der Bereich zwischen Extrusionsöffnung und Auffangbad, in dem die Lösung noch fluid ist, wird auch als Liquidusbereich bezeichnet. Durch Eintritt in das Auffangbad wird die Lösung verfestigt. Man spricht von einem Solidusbereich. Erfindungsgemäß werden vorzugsweise keine Abschirmbereiche ohne Gasfluss im Liquidusbereich vorgesehen.

Zur Erzielung eines laminaren Gasstroms entlang der Extrusionsvorrichtung kann ein Führungselement vorhanden sein. Damit kann der Gasstrom entlang der Extrusionsöffnungen laminar vorbei geführt werden, selbst wenn dieser in einer gekrümmten Bahn (z.B. bei einem gekrümmten oder gewölbten Extrusionsöffnungsbereich am Extruder oder Spinnvorrichtung) geführt wird. In der Regel wird auch über dem Auffangbad, über der Soliduslinie, der Gasstrom in einer gekrümmten Bahn geführt, in Abhängigkeit des Gasstroms über der Extrusionsvorrichtung.

Vorzugsweise wird der Bereich zwischen den Extrusionsöffnungen und dem Auffangbad im Wesentlichen vollständig durch den seitlichen Gasstrom gespült. Dadurch werden Turbulenzen an den Rändern des Gasstroms vermieden. Ebenso wird die Durchführung des geformten Materials durch verschiedene Gaszonen mit unterschiedlichen Strömungsgeschwindigkeiten, inklusive stehender Gase, vermieden.

Vorzugsweise ist das Gebläse bzw. der eingeleitete Gasstrom zur Extrudierrichtung in einem spitzen Winkel angeordnet. In einem leicht geneigten Winkel zur Extrudierrichtung erhält der Gasstrom eine Strömungskomponente in der Extrudierrichtung, womit ein sanfterer Verlauf der verfestigenden Lösung erzielt wird. Die Extrusionsvorrichtung muss ebenfalls an die Strömungsführung angepasst sein, sodass eine leichte Schrägstellung der Extrusionsvorrichtung von Vorteil ist. Dies ist eine weitere Maßnahme, um dem Herausreißen von verfestigenden Partikeln aus dem Lösungsstrom vorzubeugen. Auch kann durch die Schrägstellung der Extrusionsvorrichtung bewusst auf die Spinnviskosität der Extrudate Einfluss genommen werden, da in der Gasanstromseite positionierte Extrudate eine schnellere Viskositätsänderung durchlaufen als auf der Abgasseite positionierte Extrudate. Durch ein entsprechendes Führungselement kann das Gas laminar um die Extrusionsvorrichtung trotz geneigter Anströmrichtung geführt werden. Geeignete Führungselemente sind beispielsweise Prallbleche oder Abzüge, mit oder ohne Unterdruck/Ansaugen. Der Gasstrom kann auf das Auffangbad in einem schrägen Winkel gerichtet sein, sodass ein Staudruck an der Anstromseite entsteht. Dadurch kann die Oberfläche des Mediums im Auffangbad/Fällbad abgetaucht werden. Dadurch sind die Spinnfäden an der Anstromseite länger dem Gasstrom ausgesetzt als die Fäden an der Abstromseite. Der spitze Winkel kann beispielsweise kleiner als 85°, insbesondere kleiner als 80°, kleiner als 75°, kleiner als 70°, kleiner als 65°, kleiner als 60°, kleiner als 55° sein. Der spitze Winkel ist vorzugsweise mindestens 30°, mindestens 35°, mindestens 40°, mindestens 45°, mindestens 50°, mindestens 55°, mindestens 60°, mindestens 65°, mindestens 70°, mindestens 75°. Durch diesen spitzen Winkel der Gebläseanordnung ergibt sich zudem ein Staudruck an der Oberfläche des Auffangbads, wodurch das darin enthaltene Medium gebläseseitig/anstromseitig absenkt. Dadurch ergeben sich für die Fluide (Spinnfäden) anstromseitig und abstromseitig unterschiedliche Verweilzeiten im Gebläsestrom. Dies optimiert die unterschiedlichen Verweilzeiten bei unterschiedlichen Viskositäten der Fluide aufgrund unterschiedlicher Temperaturen anstromseitig (meist kühler) und abstromseitig (wärmer aufgrund des durch das Fluid erwärmten Kühlgasstroms).

Zusätzlich ist es möglich das extrudierte Fluid in einem spitzen Winkel auf das Auffangbad einströmen zu lassen. Durch derart schräg angeordnete Extrusionsöffnungen (Spinndüse) erfahren die Spinnfäden vom Gebläse abstromseitig bzw. anstromseitig unterschiedliche Verweilzeiten im Gasstrombereich. Anstromseitig wird in den Fäden die Temperatur stärker gesenkt als abstromseitig, wodurch sich unterschiedliche Viskositäten des Zellulose-Fluids ergeben. Vorzugsweise sind diese Verweilzeiten länger im Fall von höherer Viskosität (meist anstromseitig) als bei niedrigeren Viskositäten (meist abstromseitig). Der spitze Winkel ist vorzugsweise mindestens 10°, mindestens 20°, mindestens 30°, mindestens 40°, mindestens 50°, mindestens 60°, mindestens 70°, mindestens 80°, bzw. kleiner als 85°, insbesondere kleiner als 80°, kleiner als 75°, kleiner als 70°, kleiner als 65°, kleiner als 60°, kleiner als 55°. Vorzugsweise ist der Winkel zwischen 10° und 45°.

Vor der Extrusion durch die Extrusionsöffnungen kann die Lösung in einer Extrusionskammer gesammelt und/oder temperiert werden. Vor der Extrusion können z.B. in der Kammer noch Additive unterschiedlicher chemischer und physikalischer Provenienz der Lösung beigemengt werden. Vorzugsweise ist die Extrusionskammer durch ein Heizelement, z.B. durch ein Wärmemedium, welches in Heizkanälen geführt wird, beheizt. Dieses oder ein weiteres Heizelement kann auch dazu benutzt werden die Extrusionsöffnungen zu beheizen. Die Öffnungen können in eine Extrusionsplatte aufgenommen sein, welche vorzugsweise über ein Heizelement verfügt. Vorzugsweise ist der Wärmeleitkoeffizient der Extrusionsplatte im Bereich des Wärmeleitkoeffizienten von Metallen, z.B. kann er zwischen 5 bis 100 W/mK, vorzugsweise 10 bis 60 W/mK betragen. Die Extrusionsplatte, das Material des Gebläses - insbesondere die Trennwände zwischen den einzelnen Austrittsöffnungen des Gebläses - können aus verschiedenen Materialien hergestellt sein, wie Stahl, Edelstahl, Keramik, Sintermetallen, Aluminium, Kunststoff, Buntmetallen oder Edelmetallen. Bevorzugte Werkstoffe sind alle Eisen, Eisenlegierungen, Chrom-Nickelstähle, Nickelstähle (z.B. Hastelloy Materialien), Titan, Tantal, Siliziumcarbid, Glas, Keramik, Gold, Platin und auch Kunststoffe. Spezielle Materialien sind Legierungen mit hohem Molybdängehalt bzw. Nickel, Chrom und Molybdän-Legierungen zur Beständigkeit gegen Lochfraß und Spaltkorrosion oder Nickel-Kupfer-Legierungen mit hoher Zugfestigkeit. Materialbeispiele sind Hastelloy C (hohe Korrosionsfestigkeit), Hastelloy B (ausscheidungshärtende Hochtemperaturlegierung), Inconel (Beständigkeit gegen Spannungskorrosionsrisse in petrochemischen Anwendungen), Incoloy (hohe Festigkeit als auch Beständigkeit gegen hohe Temperaturen und gegenüber Oxidierung und Aufkohlung), Monel (hohe Zugfestigkeit, beständig gegenüber Korrosion). Vorzugsweise wird ein Material mit einer Wärmeleitfähigkeit von 5 bis 100 W/mK, speziell bevorzugt von 10 bis 60 W/mK, gewählt.

Die Extrusionsplatte kann beliebig an der Extrusionsvorrichtung befestigt sein, inklusive ablösbarer Befestigungen zum einfachen Austausch der Platte. Weiters kann die Platte angeschweißt, angeklebt oder angeflanscht oder durch Klemmen oder Nieten befestigt sein. Die Extrusionsplatte kann weiters beschichtet sein, insbesondere zum Abweisen des extrudierten Materials bzw. der sich aus der Polymermasse abscheidenden Partikel oder zum besseren Übertragen von Wärme.

Vorzugsweise hat die Extrusionsplatte eine Dicke von maximal 20 mm, speziell bevorzugt maximal 15 mm, maximal 12 mm, maximal 10 mm, oder maximal 8 mm. Die in der Extrusionsplatte angebrachten Extrusionsöffnungen werden über speziell ausgerichtetes Spinndüsenplatten angebracht wobei die Spinndüsenplatten eine Dicke von mindestens 0,25 mm; 0,5 mm; 0,75 mm; 1,0 mm; 1,25 mm; 1,5 mm; 2,0mm;3,0 mm; und/oder maximal 1,0 mm; 1,25 mm; 1,5 mm; 2,0mm; 3,0 mm aufweist.

Vorzugsweise wird der beheizte Teilstrom durch eine Extrusionsplatte mit den Extrusionsöffnungen und/oder durch ein Heizelement beheizt.

Das Gebläse enthält vorzugsweise eine Vielzahl an Austrittsöffnungen für den Gasstrom. Beispielsweise können mehrere Kanäle im Gebläse hierzu vorgesehen werden. Diese Kanäle sind vorzugsweise eng anliegend, wie z.B. in einer Wabenform. Zur Ausbildung eines Heizteilstroms kann eine Seite des Gebläses beheizt werden, wobei durch die Abtrennungen der Kanäle die Heizwärme zu einem gewissen Grad, kontinuierlich abnehmend, weiterleiten kann. Die Kanäle, welche zum Kühlteilstrom führen, sollten so Großteils ungeheizt bleiben bzw. auf die gewünschte niedrige Temperatur geheizt werden.

Vorzugsweise werden in Richtung des seitlichen Gasstroms mehrere Extrusionsöffnungen vorgesehen. Die Extrusionsöffnungen können auf einer bombierten, d.h. gewölbten, Extrusionsplatte vorgesehen werden, wobei vorzugsweise der Wölbungwinkel a am Rand der Extrusionsplatte zur Extrudierrichtung ein spitzer Winkel ist. Der Wölbungswinkel a ist vorzugsweise kleiner als 85°, insbesondere kleiner als 80°, kleiner als 75°, kleiner als 70°, kleiner als 65°, kleiner als 60°, kleiner als 55°. Vorzugsweise wird diese Ausführungsform mit dem genannten Führungselement zur Ab- und/oder Zuleitung des Gasstroms kombiniert. So wird der Gasstrom entlang des bombierten bzw. gewölbten Bereichs an der Extrusionsplatte entlang geleitet. Durch eine Wölbung kann das Profil der Anbringung der Extrusionsöffnungen dem Profil der Oberfläche einer Flüssigkeit im Auffangbad angepasst werden. Durch Einströmen der Lösung in das Auffangbad wird dort die Oberfläche der Flüssigkeit gekrümmt, wodurch bei flacher Führung der Extrusionsöffnungen die mittleren Materialstrahlen eine längere Wegzeit benötigen als die äußeren. Dadurch können Inhomogenitäten durch unterschiedliche Verweilzeiten im Kühlteilstrom entstehen. Diese werden erfindungsgemäß vermieden.

Die Lösung, welche erfindungsgemäß durch Extrusion geformt wird, ist ein viskoses Fluid, wie in der US 4, 416, 698 oder der WO03/057951 A1 beschrieben. Vorzugsweise werden Zelluloselösungen im Bereich von 4 bis 23% Zellulose für die Verarbeitung zu Extrusionsprodukten eingesetzt. Vorzugsweise besteht die Spinnlösung aus folgenden Komponenten Zellulose 10 - 15 %, Aminoxid (NMMO = N-Methylmorpholin - N- Oxid 77-75 %) Wasser 12-9 %.

Bei der Durchführung des erfindungsgemäßen Verfahrens können der Spinnlösung auch neben den die Spinnlösung stabilisierenden Reagenzien, wie Gallussäurepropylester in alkalischer Spinnmasse, noch zusätzliche Additive zur Einstellung spezifischer Produkteigenschaften durch Inkorporation zugesetzt werden welche in der textilen und technischen Faserverarbeitung Anwendung finden. Solche Additive können sein: Mattierungsmittel (TiO₂), Kontrastmittel (BaSo₄), Aktivkohle oder Rußpartikel, Siliziumdioxid (SiO₂), Farbstoffe, Vernetzungsmittel, höherwertige Alkohole zur Einstellung der Gleiteigenschaften der Spinnlösung oder Verbesserung und /oder Verzögerung des Koagulationsverhaltens der gelösten Zellulose im Auffangbad, Biopolymere jeglicher Art, natürlich vorkommende Polyaminosaccharide, Kohlenhydrate und Proteine sowie Mineralstoffen und Vitamine, zum Ionentausch geeignete organische und anorganische Materialien. Des Weiteren kann das erfindungsgemäße Verfahren auch mit Polymermischungen auf Basis von Biopolymeren und synthetisch hergestellten Polymeren betrieben werden.

Vorzugsweise werden Additive, welche die Schmelztemperatur von NMMO-Hydrat Kristallen senken zugesetzt. Solche Additive sind beispielsweise Polymere wie PEG oder chaotrope Substanzen. Dadurch kann die Spinnlösung während dem erfindungsgemäßen Spinn- bzw. Extrusionsverfahren auf noch niedere Temperaturen gehalten werden, welches die Partikelbildenden Prozesse effektiver vermeidet. Durch entsprechende Zusätze kann die Temperatur der Lösung an den Extrusionsöffnungen auch zwischen 70°C 80°C betragen, vorzugsweise mindestens 71°C, mindestens 72°C, mindestens 73°C, mindestens 74°C, mindestens 75°C, mindestens 76°C, mindestens 77°C, mindestens 78°C, mindestens 79°C oder mindestens 80°C, bzw. maximal bei den bereits genannten Temperaturen, aber auch bei maximal 87°C, maximal 86°C, maximal 85°C, maximal 84°C, maximal 83°C, maximal 82°C, maximal 81°C maximal 80°C.

Zur Formung der Lösung können die Austrittsöffnungen in beliebiger Form gewählt werden. Möglich sind längliche Öffnungen zum Formen von Folien oder kleine, runde Öffnungen zur Formung von Filamenten oder Fäden. Vorzugsweise sind die Öffnungen maximal 2 mm, maximal 1,5 mm, maximal 1,2 mm, maximal 1,1 mm, maximal 1 mm schmal bzw. im Durchmesser. Die Öffnungen können mindestens 0,05 mm; mindestens 0,075 mm; mindestens 0,1 mm, mindestens 0,2 mm, mindestens 0,3 mm, mindestens 0,4 mm, mindestens 0,5 mm, mindestens 0,6 mm, mindestens 0,7 mm, mindestens 0,8 mm, mindestens 0,9 mm schmal bzw. im Durchmesser sein. Nach dem Austritt ist die Lösung zwar im geformten Zustand aber noch in fluider Phase und befindet sich in der Liquidus- Zone.

Im Auffangbad können Medien, Flüssigkeiten und/oder Temperaturen vorgesehen werden, in denen die Lösung verfestigt. Beispielsweise können Flüssigkeiten oder Lösungen verwendet werden, in denen die Zellulose nicht löslich ist und somit ausfällt. Alternativ oder zusätzlich können niedrigere Temperaturen gewählt werden, bei denen sich die Zellulose in der Solidus Zone verfestigt. Durch ein zumindest zeitweises kontinuierliches Ausfällen können die erfindungsgemäßen Filamente, Stapelfasern, Fäden oder Folien erzeugt werden. Die Filamente, Stapelfasern, Fäden oder Folien können kontinuierlich oder diskontinuierlich aus dem Auffangbad ausgetragen werden. Das Medium bzw. die Flüssigkeit im Auffangbad kann ebenso kontinuierlich oder diskontinuierlich erneuert werden. Das Auffangbad kann auf eine bestimmte Temperatur temperiert werden, z.B. durch Heiz- oder Kühlelemente oder durch Steuerung des Mediumwechsels.

Die vorliegende Erfindung wird weiters durch die folgenden Figuren und Beispiele illustriert ohne auf diese speziellen Ausführungsformen der Erfindung beschränkt zu sein.

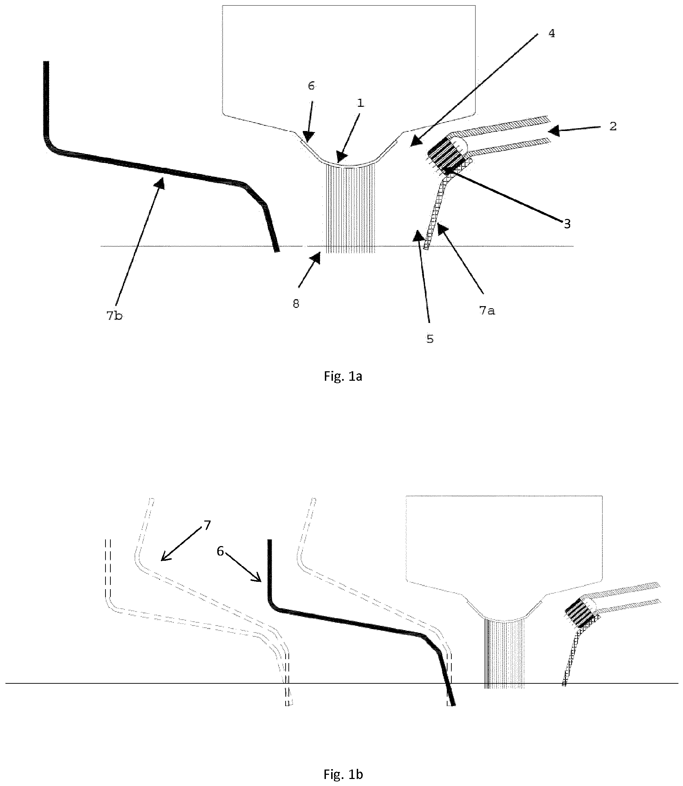

Die Figur 1 zeigt eine Extrusionsvorrichtung mit Extrusionsöffnungen 1, einem Gebläse 2 mit Gasstrom-Austrittsöffnungen 3. Die Extrusionsöffnungen 1 sind auf einer in Richtung des Gasstroms gewölbten Extrusionsplatte 6 vorgesehen. Durch Punkt 8 wird der Eintritt in ein Auffangbad gekennzeichnet. Die Extrusionsvorrichtung verfügt weiters über Stromführungselemente 7, welche anstromseitig (a) und/oder abstromseitig (b) vorgesehen werden können. Das Stromführungselement hat neben der Gasstromführung einen zweiten Zweck, nämlich der Abdeckung des Auffangbads, sodass der Übergang von Feuchtigkeit des Auffangbads in das Spinnfeld reduziert wird. Fig. 1b zeigt verschiedene alternative Positionierungen für das Stromführungselement 7b.

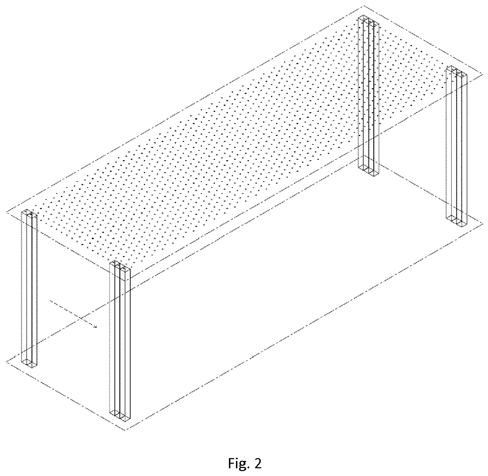

Figur 2 zeigt in drei dimensionaler Darstellung ein Spinnfeld einer Extrusionsvorrichtung mit einem Luftspalt.

Extrusionsöffnungen werden durch Punkte dargestellt, aus denen Spinnfäden (nicht dargestellt) austreten. Um die Fäden wird ein Spinngasvolumen definiert, dessen Beschaffenheit erfindungsgemäß gemessen und beeinflusst wird.

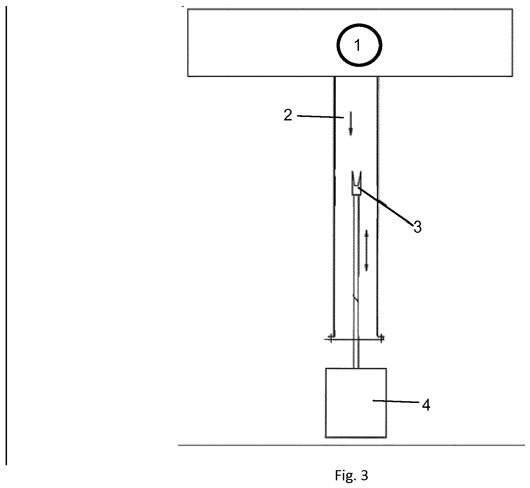

Figur 3 zeigt eine Vorrichtung zur Partikelmessung mit einer Spinndüse 1, der angezeigten Strömungsrichtung des Spinnmasse 1, einer Probennahmesonde 3 und einem Partikelzähler 4.

Figur 4 zeigt die gemessene Partikelgrößenverteilung (Dp) als Funktion der Anzahl der Partikel . Die einzelnen überlagerten Kurven zeigen die Verteilung vom größten Abstand der Sonde zum Auffangbad (obere Kurve) bis zum kleinsten Abstand (unterste Kurve). Mit größerem Düsenabstand nimmt die Häufigkeit der Partikel zu.

Figur 5 zeigt Untersuchungen der Wärmetönung von Zellulose/Aminoxid/Wasser Mischungen, wie sie auch im Spinnfeld vorkommen, bei unterschiedlichen Temperaturen und Drücken. Ab einer Temperatur von ca. 190°C setzt bei allen Drücken eine exotherme Zersetzungsreaktion ein. Überraschenderweise zeigt sich bei 1 bar im Bereich von 60°C bis 150°C, mit einem Maximum bei 105°C bis 110°C ein endothermer Vorgang, welcher bei höheren Drücken ausbleibt. Dies ist auf Umlagerungen im Kristallgefüge der Spinnlösung und auf Verdampfungsprozesse zurückzuführen, die einerseits auf Wärmeabgabe bzw. -aufnahme in der Polymerlösung bzw. der freiwerdenden Substanzen hindeuten.

### Beispiel:

Gemäß diesem Beispiel wird eine Extrusionsvorrichtung, wie in Fig. 1 dargestellt, eingesetzt. In dieser Form enthält eine Extrusionsvorrichtung eine in Richtung des Gasstroms gewölbte Extrusionsplatte 6, mit einem Profil an Extrusionsöffnungen 1, welches das Profil der Oberfläche eines Wasserbads als Auffangbad bei Einströmen des Materialfluids wiedergibt. Durch Extrusion unter Druck wird das Materialfluid durch die Form der Extrusionsöffnungen geformt, beispielsweise in Filamente und durch Passieren des Gasstroms weiters gestreckt. Durch Abkühlung wird die Klebrigkeit reduziert um ein Verkleben bei Eintritt in das Wasserbad zu verhindern.

Im Betrieb wurde eine Extrusionsvorrichtung gemäß Fig. 1 beim Spinnen von Zellulosefilamenten mit einer Zellulose-NMMO-Wasser Lösung getestet.

### Beispiel 1: Analyse der Zustände im Luftspalt

Eine Spinnlösung (Zellulose: 12,9%, NMMO 76,3%, Wasser 10,8%, alle % in gew.-%) wird durch Mischen einer wässrigen Aminoxidlösung und Zellulose dadurch hergestellt, dass man in einem dem Spinnprozess vorgelagerten Verdampfungsprozess überschüssiges Wasser entfernt, wobei sich die Zellulose (das Polymer) im aufkonzentrierten Lösungsmittel zu einer Polymermasse löst. Bereits bei diesem Lösungsherstellungsvorgang, welcher bei Unterdruck durchgeführt wird, wurde festgestellt, dass sich im Verdampfungsprozess über die Gasphase NMMO, NMM (N-Methylmorpholin = Zersetzungsprodukt von NMMO) und M (Morpholin = Zersetzungsprodukt von NMMO und NMM, NMMO = N-Methylmorpholin-N-Oxid) sowie Wasser abscheiden lässt.

Im Spinnprozess kommt es durch die Extrusion der Spinnmasse zu einer Expansionsverdampfung, weil die der Extrusionsdüse zugeführte Spinnmasse unter einem entsprechenden Förder- und Extrusionsdruck steht und dieser Extrusionsdruck nach Austreten des jeweiligen Schmelzpartikels aus der Spinndüsenbohrung auf den Anlagen-Umgebungsdruck abgebaut wird. In einem Spinnverfahren sind Spinndrücke bis zu 250 bar, je nach Zusammensetzung (Zellulosekonzentration der Spinnlösung) üblich. Durch die zuvor erwähnte Expansionsverdampfung bzw. durch die Druckentlastung der Spinnlösung von hohem Druckniveau, bei Temperaturen von 90 bis 110°C auf niedriges Druckniveau (niedrigere Umgebungstemperatur) ergibt sich eine heftige Siedebewegung der lösungsvermittelnden Komponenten (NMMO und H2O) im Filament. Die sich bildenden Dampfblasen steigen aus der Zellulose-Lösung aus (Flash-Vaporisation) . Die austretenden Partikel treten daher stark beschleunigt in den Luftspaltraum ein.

Durch die Expansion (Verdampfung der lösungsvermittelnden Komponente) wird dem Spinnlösungsstrom die zur Verdampfung der lösungsvermittelnden Komponenten notwendige Energie entzogen, wobei sich infolge des Energieentzugs das Filament von selbst abkühlt. Überraschenderweise wurde festgestellt, dass nicht nur Wasser (Simon, Int. J. Heat Mass Transfer. Vol. 37, No. 7, pp. 1133 - 1142, 1994) sondern auch NMMO, NMM und M aus der Spinnlösung abgedampft wird.

Nachdem die Zusammensetzung der lösungsvermittelnden Komponente in der Spinnlösung (NMMO - Hydrat) in einem derartigen Verhältnis steht, dass die verdampfte lösungsvermittelnde Komponente (NMMO - Hydrat) bei Temperaturbedingungen unter 75°C in Kristallform übergeht, wurde die Partikelbildung während und nach dem Spinnprozess beobachtet und versucht diese durch Modifizierung der Prozessparameter zu steuern, um das Mikroklima im Luftspaltbereich für einen optimal laufenden Spinnprozess zu gestalten.

Abtransportierte Aerosole und Kristalle können leicht im Abstrombereich der Spinndüse festgestellt werden, die im Anströmbereich der Düse nicht vorhanden sind. Diese Aerosole bestehen neben den gasförmigen Komponenten, wie Luft (O₂ und CO₂), CO, NMM und M auch aus der Verbindung NMMO-Hydrat gebildet (Monohydrat) . Es ist bekannt dass es verschiedene Formen von NMMO in Form von angelagertem Kristallwasser gibt.

### Probenahme aus Spinndüsenspülgas:

Die Probenahme des Spinngases an der Abluftseite, welches mit Aerosolen beladen ist, hatte möglichst repräsentativ und verlustfrei zu erfolgen. Dies geschah mit einer Messsonde, wobei die Sonde nach VDI2066 ausgelegt wurde. Die Auslegung erfolgte individuell, damit eine isokinetische Probenahme gewährleistet war.

Die Probenahmeleitung wurde unterhalb der Spinndüse eingeführt, wobei die Positionierung der Sonde über die Höhe des Luftspaltes, sowie über den Abstand der Probenahmesonde vom Düsenmittelpunkt variiert wurde. Figur 3 zeigt den Meßaufbau.

### Durchführung der Messung:

Die Messung an dem aus dem Spinnprozess ausgestoßenen Aerosol wurde mit einem optischen Partikelzähler - Type SMPS (Scanning Mobility Particle Sizer ™ Spectrometer) der Firma TSI durchgeführt.

Bei diesem Verfahren werden die Partikel elektrisch geladen und anschließend in einem differentiellen Mobilitäts-Analysator (DMA) fraktioniert. Die Fraktion wird mit einem Kondensationskernzähler gezählt. Durch Variation der Steuerspannung am DMA können im Prinzip beliebige Fraktionen aus dem Aerosol isoliert und gezählt werden. Dadurch erhält man schrittweise die gesamte Verteilung.

Der Kondensationskernzähler kann Partikel ab ca. 3 Nanometer Durchmesser detektieren. In der Partikelgröße ist das System nach oben hin auf ca. 1 Mikrometer Partikeldurchmesser begrenzt.

Die Probenahme erfolgte gemäß VDI 2066 mit einer aus Stahl (1.4301) gefertigten Sonde, die ummantelt und als Gegenstromwärmetauscher ausgeführt war. Es konnten Temperaturen zwischen 0°C und 60°C eingestellt werden, wobei der gezogene Spinngas-Volumenstrom zwischen 3m/s und 4 m/s eingestellt wurde.

Die Luftzuführung an die Spinndüse wurde in dichter Form an der Längsseite der Düse angebracht und die Spinndüse seitlich verblendet, damit Querströmungen durch Zug ausgeschlossen werden konnten.

Ebenso wurde die Fällbadoberfläche an der Anstromseite sowie der Abstromseite seitlich und oberflächlich abgedeckt, damit keine Feuchtigkeit während der Messung gezogen werden konnte.

Für die chemische Analyse des gezogenen Aerosolproduktes wurden auch Filtermessungen durchgeführt um die Partikel neben der Größenanalyse auch massenmäßig zu analysieren. Für die Filtermessungen wurden PTFE Membranen mit Porendurchmessern von 200 bis 300 Nanometer verwendet.

Die Temperatur der Messsonde wurde auf 18°C eingestellt jedenfalls so hoch dass keine Kristallisation von Wasser in der Luft beinhaltend möglich war, damit das Messergebnis nicht verfälscht wurde. Die Spinngastemperatur betrug in diesem Falle ca. 60°C. Die Sonde wurde nicht tiefer gekühlt um Kondensat- und Kristallisationsbildung wie oben angeführt durch gezogene Feuchtigkeit aus der Raumluft zu vermeiden, da gemäß der der Erfindung zugrunde liegenden These (Abscheidung von NMMO-Monohydrat Kristallen aus der Spinn-Polymerlösung) eine Zufuhr von Feuchtigkeit über die Kondensatbildung zur Auflösung der NMMO-Monohydratkristalle geführt hätte und keine Messung der Partikelgröße und Anzahl möglich gewesen wäre.

Fig. 4 zeigt eine Partikelgrößenverteilung für verschiedene Positionen der Aerosolmessung. Aus Fig. 4 lässt sich ableiten, dass mit größerem Düsenabstand die Häufigkeit der Partikel im Aerosol zunimmt. Daraus ist abzuleiten, dass die Partikel aus einem Kondensations-/ Kristallisationsprozess stammen müssen, wobei die Kristallisation bzw. die Häufigkeiten der Partikel mit größerem Abstand zur Düse zunimmt.

Dadurch, dass die Sonde auf 18 °C gekühlt wurde, wodurch sich keine Wasserkristalle bilden konnten, zeigen die Messergebnisse eindeutig das Vorhandensein von kondensierbaren bzw. kristallisierbarem Aerosolen. Das Kristallisationsprodukt ist auf eine NMMO-Hydrat-Verbindung zurückzuführen. Der Wasseranteil in der NMMO-Monohydratverbindung beträgt nur ca. 13%.

Durch die erfindungsgemäße Anordnung der Behandlungszonen der Spinnfäden im Luftspalt und Versorgung mit entsprechendem Spülgas kann das Mikroklima derart beeinflusst und eingestellt werden, dass die Nukleation bzw. Kristallisation der NMMO-Hydrat-Verbindung (Kristallverbindung) im Bereich der Extrusionsöffnungen verhindert bzw. verzögert werden kann.

Starkes Kühlen im Bereich des Luftspaltes, vor allem aber unmittelbar nach dem Formen führt dazu, dass eine vermehrte Kristallisation des zuvor verdampften NMMO-Hydrats unmittelbar nach dem Austreten aus der Extrusionsöffnung auftritt, wodurch die Kristallisationswärme in den Gasraum eingetragen wird und die frei werdende Wärme den Gasraum erwärmt, bzw. in Folge den Spinnprozess negativ beeinflusst.

### Ergebnisse der Aerosol - Filterproben

Während der Messungen zeigte sich, dass das aus dem Spinngas filtrierte Material die Filterporen der PTFE Filtermembran schnell verblockt.

Über lichtmikroskopisch durchgeführte Untersuchungen konnte ebenfalls NMMO-Monohydrat als kristallisiertes Produkt festgestellt werden. Diese Beobachtungen decken sich auch dahin gehend, dass bei einer kontinuierlich betriebenen Spinnvorrichtung im Abstrom-, aber auch in einem nicht optimal konstruierten Anstrombereich, besonders bei Verwendung von Freistrahlbeblasungen, NMMO-Monohydrat kristallisiert und dort Ablagerungen bildet. Jedenfalls konnte durch das Vorbeileiten des Spinnabgasstromes an einer gekühlten Metallfläche eindeutig die Abscheidung von Kristallen nachgewiesen werden, dass sich NMMO-Kristallformen an der gekühlten Oberfläche abscheiden lassen.

### Beispiel 2: Polymerexpansionseffekte bei unterschiedlichen Drücken

Durch die Druckabsenkung bei der Extrusion erfolgt eine Entspannungsverdampfung der Spinnmasse, zumindest für den Wasseranteil auf Siedetemperatur befindlichen und vorerhitzten Spinnlösung.

Basierend auf den Versuchsergebnissen wird angenommen, dass sich in Folge der Druckentspannung beim Spinnprozess bedingt durch eine Expansion des Polymers eine gewisse Entmischung bzw. Trennung der homogenen Mischphase zumindest an der Polymerlösungsoberfläche (Extrudatoberfläche) einstellt. Zwei zueinander heterogene Mischphasen, nämlich der Extrudatkern aus einer homogenen Mischung aus Zellulose/Aminoxid/Wasser und die Extrudatoberfläche aus einer Anreicherung von Aminoxid und Wasser, z.B. in Form von Kristallwasser, und/oder Wasserdampf gemischt mit thermischen Zersetzungsprodukten (aus Aminoxid = NMM (N-methylmorpholin, M = Morpholin) werden gebildet. Diese Entmischung kann zur Entstehung einer zweiten Phase im Extrudat führen. Bedingt durch Keimbildung und Wachstum von Kristallisationskeimen kann dies zur spinodalen Entmischung führen bzw. zur Anreicherung von Polymerlösungsbestandteilen an den Grenzen des gelösten Polymers. Es ist auf jeden Fall davon auszugehen, dass sich durch diesen Expansionsvorgang des Polymerlösungsstrahls die fibrilläre Struktur der fadenförmig gebildeten Filamente beim Eintritt in das lösungsmittelhältige Auffangbad (Spinnbad) bereits ausgebildet hat und die Fibrillen über Zelluloseketten nur lose verbunden sind. Ein weiterer Entmischungsvorgang findet somit im Spinnbad statt, da durch die Unvereinbarkeit gegenüber übermäßigem Wasserangebot die Polymerlösung im Spinnbad eine spontane spinodale Entmischung erfährt und sich das durch die Expansionsverdampfung zusätzlich gebildete lockere quervernetzende Netzwerk an Zellulosemolekülen unter der Spinnbadquellung aufgerissen wird. Typischerweise kann auch bei Extrusionsprodukten wie Filamenten und Stapelfasern aus einer Lösung von Zellulose/Aminoxid / Wasser eine erhöhte Fibrillierungstendenz am fertigen, trockenen Produkt nachgewiesen werden, welche sich auf die Entmischung und Anreicherung während des Extrusionsprozesses rückführen lässt.

Jedenfalls ist die Spinnlösung auf eine Temperatur erhitzt, die über der Siedetemperatur im Luftspalt liegt. Die durch die Spinndüse eingeleitete Drosselung des "überhitzten" Spinnlösungsstromes und Expansion tritt die spontane Verdampfung von NMMO/NMM/M/Wasser an der Filamentoberfläche im Gasraum auf.

Die in der Spinnlösung beobachtete Entspannungsverdampfung tritt dadurch auf, dass die vorgeheizte Spinnmasse in eine Umgebung geringeren Druckes eintritt, wobei die freiwerdende Lösungsmittel(Gemisch)-Menge implizit einerseits zur Kühlung des aus der Düsenentspannungsvorrichtung austretenden Polymerstromes fungiert. D.h. die Druckabsenkung des Polymerstromes (Zelluloselösung) von z.B. 20 - 50 bar auf Umgebungsdruck führt zu einer Überhitzung der Polymerlösung. Der neue sich einstellende Druck in der geformten Polymerlösung verbreitet sich mit hoher Geschwindigkeit über die sich in die Luftspaltumgebung ausdehnende Polymermasse. Gleichzeitig kommt es mit der Druckentlastung zu einer Änderung des spezifischen Volumens.

Die Temperaturänderung wird durch Stoffübergänge, wie z.B. Wärmeübergänge, an der Phasengrenze verlangsamt, sodass davon auszugehen ist, dass ein thermodynamisches Gleichgewicht der Polymerlösung bzw. Spinnlösung im gesponnenen Faden nicht mehr vorliegt.

Als Resublimieren bezeichnet man in der Thermodynamik auch das unmittelbare Übergehen eines Stoffes vom gasförmigen in den festen Aggregatzustand.

Bei den Druck- und Temperaturbedingungen, bei denen eine Resublimation auftritt, existiert kein flüssiger Aggregatzustand. Man bezeichnet diese Bedingungen auch unabhängig von der Richtung der Phasenumwandlung als Sublimationsdruck und Sublimationstemperatur, bzw. als Sublimationspunkt.
Jeder Stoff setzt bei seiner Resublimation die so genannte Sublimationswärme frei, die gleich der Summe aus Schmelz- und Verdampfungswärme ist.
Die Druckentspannung und Änderung des Wärmehaushaltes (Wärmetönungseffekte) der Spinnlösung wurde experimentell wie folgt untersucht.

Zur Untersuchung der Wärmetönungseffekte wurde die Spinnlösung in einem Druck DSC ausgerüstet mit Sensoren und Flüssigkeitsstickstoffkühlung in einem gelochten Tiegel durchgeführt bzw. folgenden Temperaturprogramm unterworfen.
Aufheizen: 30°C bis 300°C, Heizrate 10°C/min; Atmosphäre Stickstoff, Untersuchungsdruck: 1, 25, 50, 100 und 150 bar.

In Figur 5 sind die Untersuchungsergebnisse bei verschiedenen Untersuchungsdrücken dargestellt. Aus Fig. 5 durchgeführt bei einem Messdruck von 1 bar ist ersichtlich, dass sich ab ca. 58-60°C ein endotherm ablaufender Vorgang einstellt. Die Peaktemperatur des endothermen Vorganges liegt zwischen 105 und 110°C.
Dieser Endothermeffekt beschreibt eindrücklich, dass es im Bereich ab 60°C zu Umlagerungen im Kristallgefüge der Spinnlösung kommt bzw. auch Verdampfungsprozesse eingeleitet werden die einerseits auf Wärmeabgabe bzw. Aufnahme in der Polymerlösung bzw. der freiwerdenden Substanzen hindeuten. Durch weitere Wärmezuführung wird ab 190°C die exotherme Zersetzung der Spinnmasse eingeleitet.

Bei den höheren Drücken von 25, 50, 100, bzw. 150 bar zeigt sich, dass der endotherme Effekt der Spinnlösung im Temperaturbereich 60 bis 150°C unterdrückt wird und zu höheren Temperaturen verschoben wird. Als Ursache für dieses Verhalten kann eindeutig der Druck auf die Verdampfung der in der Spinnlösung befindlichen Komponenten gewertet werden. Interessant ist auch, dass die bei höheren Messtemperaturen eingeleiteten Exothermien der Spinnlösung kleiner ausfallen wie bei der 1 bar Messung.

Nachdem der Spinnvorgang bedingt durch den erzeugten Spinndruck (Funktion des der Spinnlösungskonzentration, des Molekulargewichtes (DP Wert, "degree of polymerisation", durchschnittlicher Polymerisationsgrad der Zellulose) des Massedurchsatzes, der Viskosität, der Temperatur, des Spinndüsendurchmessers, der Spinndüsenlänge) beim Austreten zwangsläufig eine Druckentlastung auf Umgebungsdruck stattfindet (üblicher Druckbereich von 15 - 100 bar) wird aus den gemessenen Enthalpiekurven klar, dass beim Entspannungsdruckunterschied vor und nach der Extrusion die Polymerlösung einem endothermen Effekt unterzogen wird. Dieser Effekt ist beim Peakmaximum bei 105°C bis 110°C am stärksten. Erfindungsgemäß wird diese Lehre umgesetzt um bei niedrigeren Temperaturen den Extrusionsspinnprozess zu betreiben.

### Beispiel 3: Spinnvorrichtung

Eine NMMNO-Spinnmasse bestehend aus einer Mischung von Zellstoffen des Typs MoDo Crown Dissolving-DP 510-550 und Sappi Saiccor DP 560-580 wurden in folgender Zusammensetzung kontinuierlich hergestellt: Zellulose 12,9%, Aminoxid (NMMO-N-Methyl-Morpholin-N-Oxid) 76,3 %, Wasser 10,8%.

Die Lösungsherstellung erfolgte nach erfolgter wässriger enzymatischer Vorbehandlung und Suspensionsherstellung durch Abdampfen von überschüssigem Wasser unter Vakuum in einem kontinuierlich durchströmten Reaktionsgefäß bei einer Temperatur von 97-103°C. Zur Stabilisierung des Lösungsmittels NMMO/Wasser wurden bekannte Stabilisatoren zugesetzt. Die Stabilisierung der Zelluloselösung erfolgt wie bekannt mit Gallussäurepropylester in alkalischer Spinnmasse und Lösungsmittel. Zur sicherheitsgerichteten Lösungsherstellung ist es vorteilhaft, dass der Schwermetallionengehalt kontrolliert wird und einen Wert von 10 ppm als Summenparamter (aus Metallionen und Buntmetallionen) nicht überschreitet. Vorzugsweise wird ein Zellstoff mit einem Zellulose α(Alpha)-Gehalt von größer 90 % zur Lösungsherstellung eingesetzt (α-Gehalt bestimmt als unlöslicher Anteil in 17,5% NaOH). Der Carbonylgruppengehalt des verwendeten Zellstoffes betrug < 0,1%. Der Carboxylgruppengehalt des Zellstoffes bewegte sich ebenfalls im Bereich von < 0,1%. Es sollte darauf geachtet werden, dass der Alkali- und Erdalkaliionengehalt im Zellstoff < 350 ppm beträgt. Die Dichte der hergestellten Lösung beträgt bei Raumtemperatur 1.200 kg/m³. Die über die Zellstoff Mischungskomponenten eingestellte Nullscherviskosität der Spinnmasse kann, gemessen bei 75°C, bis zu 15.000 Pas betragen. Je nach der im Spinnprozess gewählten Verarbeitungstemperatur kann sich die Nullscherviskosität im Bereich von 500 bis 15.000 Pas bewegen. Bedingt durch das strukturviskose Verhalten der Spinnlösung fällt die Viskosität bei Spinnscherraten je nach gewählter Verarbeitungstemperatur auf einen Bereich von unter 100 Pas ab und ist ebenfalls stark Abhängig von der Zellulosekonzentration in der Spinnlösung.

Als das für den Spinnprozess notwendige Spinnbad wurde eine NMMO-Lösung verwendet, wobei die NMMO Konzentration durch Zugabe von wässrigem Kondensat im Bereich zwischen 18 und 23% und einer Temperatur von 15 bis 28°C gehalten wurde. Die im Spinnbad befindlichen Metall- und Buntmetallkationen wiesen eine Konzentration von < 0, 25 mg/l auf. Die Alkali- und Erdakalikontetration im Spinnbad bewegte sich im Bereich von 30 bis 50 mg/l.

Die wie oben beschrieben und versponnene Spinnlösung wurde einem Versuchsprogramm gemäß beiliegender Tabelle 1 unterzogen.

Als Spinndüse wurde ein rechteckig bebohrtes Düsenblech (Material Edelstahl) mit unterschiedlicher Stärke verwendet. Die Spinndüsenöffnungen wurden in Form eine von Kapillarbohrungen in dem Düsenblech angebracht. Als Bohrlochform wurde eine Geometrie verwendet, bei welcher die Spinnlösung in einem konischen Teil in das Spinnloch einläuft und nach dem konischen Teil in einen zylindrischen Teil des Bohrloches geleitet wird, bevor die Spinnmasse in den Luftspalt unter gleichzeitigem Verziehen ausgedrückt wird. Anschließend taucht die zu Fibrillen gestreckte Masse in das Spinnbad zur Verfestigung und endgültigen Fadenbildung ein.

Die Spinndüsenöffnungen wurden auf einer Temperatur wie in der Beispielstabelle 1 angeführt gehalten.

Der Luftspalt zwischen den Spinndüsenöffnungen und der Spinnbadoberfläche stellt das Spinngasvolumen dar. Wobei das Spinngasvolumen aus dem Spinnfeld und der dem Spinnfeld zugehörigen Gasspalthöhe gebildet wird.

Die Spinnfäden durchquerten den temperaturgeschichteten Gasraum (Spinnvolumen), wobei in diesen Gasraum während des Spinnvorganges kontinuierlich durch den Spinngasstrom 1 und den Spinngasstrom 2 durchgeführt wurden. Versuch 8 und Versuch 9 wurden ohne die Zuführung eines Spinngasstromes 2 durchgeführt.

Die Fadenbildung bzw. Koagulation der verstreckten Zelluloselösung erfolgte sodann im Spinnbad, welche unterhalb der Spinndüsenöffnungen angebracht war.
Die aus dem Spinnbad austretenden verstreckten Fäden wurden mittels eines Abzugsorgans kontinuierlich abgezogen.

Während der Versuche wurde der Spinngas-Abgasstrom abströmseitig des Spinnfeldes auf Aerosolpartikel vermessen, wobei die Partikelgröße und Konzentration versuchsabhängig in der Tabelle 1 dargestellt sind.

Überraschenderweise konnte festgestellt werden, dass sich über die Variation des Spinndruckes der Spinntemperatur eine Abhängigkeit der aus der Zelluloselösung freigesetzten Aerosolpartikel nachweisen lässt. Es konnte somit eine Temperatur und Spinndruck induzierte Freisetzung von Aerosolpartikel festgestellt werden, wobei eine geringere Aerosolfreisetzung im Spinntemperaturbereich zwischen 87°C und 94°C bei einem Spinndruck von zwischen 22 und 34 bar festgestellt werden konnte (Versuche 5, 6, 7).

Das Spinnverhalten wurde zusätzlich visuell bestimmt, unter Berücksichtigung der Anzahl der Spinnfehler, wie Fadenabrisse und Verklebungen. Das Spinnverhalten wurde von 1 (am besten) bis 5 (am schlechtesten) eingestuft, wobei das erfindungsgemäße Verfahren gem. Versuchen 5, 6, und 7 das beste Verhalten zeigte.

Wird die Spinnlösung die über alle Versuche die gleiche Zusammensetzung auswies jedoch bei höheren Spinntemperaturen und Spinndrücken versponnen, lässt sich eine wesentlich höhere Aerosolpartikelkonzentration im durchgeleiteten Gasstrom feststellen. Nachdem die Aerosolpartikel bereits bei Temperaturen von 20°C kristallisierten, kann bei den detektierten Partikeln nur von während dem Spinnprozess durch Expansionsverdampfung austretenden NMMO-2,5 Hydrat, NMMO-1 Hydrat oder reinem NMMO ausgegangen werden. Die Aerosolpartikel lassen sich neben der Aerosolmessung mittels Messgerät auch leicht durch abscheiden an einem hinter dem Spinnfeld angeordneten gekühlten Abscheideblech nachweisen. Neben dem kristallisierten Aminoxid(NMMO-Hydrat) lassen sich auch NMMO-typische Zersetzungsprodukte (die während der Spinnmasseherstellung entstehen) wie NMM (N-Methyl-Morpholin) M (Morpholin) und anderen lösungsspezifischen Abbauprodukten aus der Spinnmasse abscheiden.

| | | **Versuch 1** | **Versuch 2** | **Versuch 3** | **Versuch 4** | **Versuch 5** | **Versuch 6** | **Versuch 7** | **Versuch 8** | **Versuch 9** | **Versuch 10** | **Versuch 11** | **Versuch 12** | **Versuch 13** |
|---|---|---|---|---|---|---|---|---|---|---|---|---|---|---|
| Spinnlösungstemperatur | °C | 105 | 107 | 110 | 109 | 92 | 87 | 94 | 112 | 114 | 117 | 119 | 121 | 124 |
| Druchsatz pro Loch | g/Loch min | 0,025 | 0,025 | 0,050 | 0,050 | 0,025 | 0,034 | 0,025 | 0,050 | 0,050 | 0,025 | 0,025 | 0,050 | 0,050 |
| Duchmesser | | 0,100 | 0,100 | 0,100 | 0,100 | 0,070 | 0,080 | 0,070 | 0,070 | 0,070 | 0,050 | 0,050 | 0,050 | 0,050 |
| Düsenlänge | mm | 1,00 | 1,50 | 1,00 | 1,50 | 1,00 | 1,50 | 1,50 | 1,00 | 1,50 | 1,00 | 1,50 | 1,00 | 1,50 |

| **Spinnfaden - Abzugsgeschwindigkeit** | | | | | | | | | | | | | | |
|---|---|---|---|---|---|---|---|---|---|---|---|---|---|---|
| Titer | dtex | 1,40 | 1,42 | 1,41 | 1,39 55,7 | 1,43 | 1,38 | 1,40 | 1,43 | 1,42 | 1,40 | 1,41 | 1,44 | 1,42 |
| Abzugsgeschwindigkeit | | 27,9 | 27,9 | 55,7 | 55,7 | 27,9 | 38,5 | 27,9 | 55,7 | 55,7 | 27,9 | 27,9 | 55,7 | 55,7 |
| spez. Lochdichte | Fäden/mm² | 3 | 3 | 2,5 | 2,5 | 3 | 3 | 3 | 2,5 | 2,5 | 3 | 3 | 2,5 | 2,5 |
| Querschnittsfläche Löcher (Fäden) am Düsenaustritt ohne die swell pro mm² Düsenfläche | | 0,024 | 0,024 | 0,020 | 0,020 | 0,012 | 0,015 | 0,012 | 0,010 | 0,010 | 0,006 | 0,006 | 0,005 | 0,005 |
| Querschnittsfläche der Filamente am Verzugsende | | 0,00035 | 0,00036 | 0,00035 | 0,00035 | 0,00036 | 0,00035 | 0,00035 | 0,00036 | 0,00036 | 0,00035 | 0,00035 | 0,00036 | 0,00036 |
| **gemittelte Filamentguerschnittsfläche pro mm² Düsenfläche** | | **0,010** | **0,010** | **0,008** | **0,008** | **0,005** | **0,006** | **0,005** | **0,004** | **0,004** | **0,002** | **0,002** | **0,002** | **0,002** |
| Volumen der Filamente bei voller Austrittsfläche zylindrisch | | 0,589 | 0,589 | 0,491 | 0,491 | 0,289 | 0,377 | 0,289 | 0,241 | 0,241 | 0,147 | 0,147 | 0,123 | 0,123 |
| Volumen der Filamente bei gemittelter Filamentquerschnittsfläche | | 0,239 | 0,239 | 0,199 | 0,199 | 0,118 | 0,154 | 0,118 | 0,099 | 0,099 | 0,062 | 0,062 | 0,052 | 0,052 |
| Spinnfeldvolumen/ je mm Düsenbreite | mm³/mm | 25 | 50 | 25 | 25 | 25 | 25 | 25 | 25 | 25 | 25 | 25 | 25 | 25: |
| Spinngasvolumen im Spinnfeld = Spinnfeldvolumen minus Volumen Filamente bei gemittelter Austrittsfläche | mm³ | 24,761 | 49,761 | 24,801 | 24,801 | 24,882 | 24,846 | 24,882 | 24,901 | 24,901 | 24,938 | 24,938 | 24,948 | 24,948 |
| Verhaltnis von Spinnfeldgesamtvolumen/gemitteltem Fadenvolumen | Faktor | 104,809 | 209,581 | 125,451 | 125,477 | 211,096 | 162,689 | 211,208 | 252,048 | 252,101 | 404,401 | 404,265 | 479,976 | 480,360 |
| Fadenvolumen in % vom Spinnfeldgesamtvolumen | % | 0,954 | 0,477 | 0,797 | 0,797 | 0,474 | 0,615 | 0,473 | 0,397 | 0,397 | 0,247 | 0,247 | 0,208 | 0,208 : |
| | | | | | | | | | | | | | | |
| Anzahl Spinnfelder in Gasstromrichtung | | 20,000 | 20,000 | 20,000 | 20,000 | 20,000 | 20,000 | 20,000 | 20,000 | 20,000 | 20,000 | 20,000 | 20,000 | 20,000 |
| Spez. Spinngasstrom 1 Zuführung über Anzahl Spinnfelder | Liter/h je mm Spinndüsenlänge : | 150 | 250 | 275 | 280 | 60 | 60 | 60 | 250 | 275 | 250 | 250 | 275 | 350 |
| Spez. Spinngasstrom 2 Zuführung über Anzahl Spinnfelder | Liter/h je mm Spinndüsenlänge | 125 | 50 | 25 | 30 | 100 | 100 | 100 | 0 | 0 | 25 | 25 | 75 | 75 |
| spez. Spinngas Behandlungsstrom 1 | Liter/h je Spinnfeld | 7,5 | 12,5 | 13,8 | 14,0 | 3,0 | 3,0 | 3,0 | 12,5 | 13,8 | 12,5 | 12,5 | 13,8 | 17,5 |
| spez. Spinngas Behandlungsstrom 2 | Spinnfeld | 6,25 | 2,50 | 1,25 | 1,50 | 5,00 | 5,00 | 5,00 | - | | 1,25 | 1,25 | 3,75 | 3,75 |
| gemessene Partikelkonzentration im Spinnabgasstrom | µg/m³ | 2,80E+04 | 3,20E+04 | 3,35E+04 | 3,05E+04 | 2,98E+04 | 3,20E+4 | 3,47E+04 | 3,38E+04 | 3,86E+04 | 3,65E+04 | 4,50E+04 | 4,18E+04 | 4,95E+04 |
| Spinngasstrom Zuführung pro mm³ Spinnfeldvolumen | Liter/h je Spinnfeld mm³ | 0,55 | 0,30 | 0,60 | 0,62 | 0,32 | 0,32 | 0,32 | 0,50 | 0,55 | 0,55 | 0,55 | 0,70 | 0,85 |
| | Konz. = Abfuhr in µg/h je mm³ Spinnfeld | 15 | 10 | 20 | 19 | 10 | 10 | 11 | 17 | 21 | 20 | 25 | 29 | 42 |
| Luftwechselzahl im Spinnfeld | | 5,50E+05 | 3,00E+05 | 6,00E+05 | 6,20E+05 | 320E+05 | 3,20E+05 | 3,20E+05 | 5,00E+05 | 5,50E+05 | 5,50E+05 | 5,50E+05 | 7,00E+05 | 8,50E+05 |
| Spinnverhalten | | 2 | 2 | 2-3 | 2-3 | 1-2 | 1-2 | 1-2 | 2-3 | 2-3 | 3-4 | 3-4 | 4 | 4 |

## Patentansprüche

1. Verfahren zur Herstellung von festen Zelluloseformkörpern oder -folien aus einer Lösung von Zellulose, NMMO (N-Methyl-Morpholin-N-oxid) und Wasser, durch Extrudieren der Lösung durch eine oder mehrere Extrusionsöffnungen unter Druck und Verfestigen der Zelluloseformkörper in einem Auffangbad, wobei die Lösung zwischen den Extrusionsöffnungen und dem Auffangbad durch einen Luftspalt geführt wird, **dadurch gekennzeichnet, dass** die Temperatur der Lösung an den Extrusionsöffnungen unter 105°C ist und der Druckunterschied zwischen dem Druck der Lösung unmittelbar vor der Extrusion und nach Extrusion im Luftspalt zwischen 8 und 40 bar ist.

2. Verfahren nach Anspruch 1, **dadurch gekennzeichnet, dass** die Temperatur der Lösung zwischen 80°C und 98°C, vorzugsweise zwischen 84°C und 96°C ist.

3. Verfahren nach Anspruch 1 oder 2, **dadurch gekennzeichnet, dass** der Druckunterschied zwischen 16 bar und 38 bar, vorzugsweise zwischen 20 bar und 35 bar, ist.

4. Verfahren nach einem der Ansprüche 1 bis 3, **dadurch gekennzeichnet, dass** der Druck unmittelbar vor der Extrusion zwischen 13 und 50 bar ist.

5. Verfahren nach einem der Ansprüche 1 bis 3, **dadurch gekennzeichnet, dass** der Druck nach Extrusion im Luftspalt zwischen 0,5 bar und 3 bar ist, vorzugsweise mindestens 1 bar.

6. Verfahren nach einem der Ansprüche 1 bis 4, **dadurch gekennzeichnet, dass** im Luftspalt ein seitlicher Gasstrom geführt ist.

7. Verfahren nach Anspruch 6, **dadurch gekennzeichnet, dass** der Gasstrom zwischen 30 bis 300 Liter/h Gas pro mm Länge des Bereichs der Extrusionsöffnungen in Gasstromrichtung oder zwischen 0,15 und 20 Liter/h Gas pro mm³ Spinnfeldvolumen im Luftspalt beträgt.

8. Verfahren nach Anspruch 6 oder 7, **dadurch gekennzeichnet, dass** der Bereich zwischen den Extrusionsöffnungen und dem Auffangbad im Wesentlichen vollständig durch den seitlichen Gasstrom gespült wird.

9. Verfahren nach einem der Ansprüche 6 bis 8, **dadurch gekennzeichnet, dass** der seitliche zugeführte Gasstrom laminar ist.

10. Verfahren nach einem der Ansprüche 6 bis 9, **dadurch gekennzeichnet, dass** in Richtung des seitlichen Gasstroms mehrere Extrusionsöffnungen vorgesehen sind.

11. Verfahren nach einem der Ansprüche 6 bis 10, **dadurch gekennzeichnet, dass** ein Teilstrom des seitlichen Gasstroms beheizt ist, vorzugsweise durch eine Extrusionsplatte mit den Extrusionsöffnungen und/oder durch ein Heizelement in einem Gebläse.

12. Verfahren nach einem der Ansprüche 1 bis 11, **dadurch gekennzeichnet, dass** die Zelluloseformkörper ausgewählt sind aus Zellulosefilamenten, Zellulosestapelfasern, Zellulose-Vlieskörper oder Zellulosefolien.

13. Verfahren nach einem der Ansprüche 1 bis 12, **dadurch gekennzeichnet, dass** aus der extrudierten Lösung eine oder mehrere die Zellulose lösungsvermittelnden Komponenten abgeschieden wird, vorzugsweise durch einen seitlich zugeführten Gasstrom.

14. Verfahren nach Anspruch 13, **dadurch gekennzeichnet, dass** die dem seitlich zugeführten Gasstrom abgeschiedenen Komponenten aus dem Spinnfeld abströmseitig ausgetragen wird.

15. Verfahren nach Anspruch 14, **dadurch gekennzeichnet, dass** die aus dem Spinnfeld abströmseitig ausgetragenen Komponenten kristallisierbar sind.

## Claims

1. Method for producing solid cellulosic-shaped articles or films from a solution of cellulose, NMMO (N-methylmorpholine N-oxide) and water by extruding the solution through one or more extrusion openings under pressure and solidifying the cellulosic-shaped articles in a collection bath, the solution being guided through an air gap between the extrusion openings and the collection bath, **characterised in that** the temperature of the solution at the extrusion openings is below 105°C and the pressure difference between the pressure of the solution immediately before extrusion and after extrusion in the air gap is between 8 and 40 bar.

2. Method according to claim 1, **characterised in that** the temperature of the solution is between 80°C and 98°C, preferably between 84°C and 96°C.

3. Method according to either claim 1 or claim 2, **characterised in that** the pressure difference is between 16 bar and 38 bar, preferably between 20 bar and 35 bar.

4. Method according to any of claims 1 to 3, **characterised in that** the pressure immediately before extrusion is between 13 and 50 bar.

5. Method according to any of claims 1 to 3, **characterised in that** the pressure after extrusion in the air gap is between 0.5 bar and 3 bar, preferably at least 1 bar.

6. Method according to any of claims 1 to 4, **characterised in that** a lateral gas flow is guided in the air gap.

7. Method according to claim 6, **characterised in that** the gas flow is between 30 and 300 litres/h of gas per mm of length of the region of the extrusion openings in the gas flow direction or is between 0.15 and 20 litres/h of gas per mm³ of spinning field volume in the air gap.

8. Method according to either claim 6 or claim 7, **characterized in that** the region between the extrusion openings and the collection bath is flushed substantially completely by the lateral gas flow.

9. Method according to any of claims 6 to 8, **characterised in that** the laterally fed gas flow is laminar.

10. Method according to any of claims 6 to 9, **characterised in that** a plurality of extrusion openings is provided in the direction of the lateral gas flow.

11. Method according to any of claims 6 to 10, **characterised in that** a partial flow of the lateral gas flow is heated, preferably by an extrusion plate comprising the extrusion openings and/or by a heating element in a fan.

12. Method according to any of claims 1 to 11, **characterised in that** the cellulosic-shaped articles are selected from cellulose filaments, cellulose staple fibres, cellulose non-woven articles or cellulose films.

13. Method according to any of claims 1 to 12, **characterised in that** one or more components solubilising the cellulose is/are separated from the extruded solution, preferably by means of a laterally fed gas flow.

14. Method according to claim 13, **characterised in that** the components separated by means of the laterally fed gas flow are discharged from the spinning field on the flow-off side.

15. Method according to claim 14, **characterised in that** the components discharged from the spinning field on the flow-off side can be crystallised.

## Revendications

1. Procédé de fabrication d'objets moulés ou de feuilles solides en cellulose, à partir d'une solution de cellulose, de NMMO (N-oxyde de N-méthyl-morpholine) et d'eau, par extrusion de la solution à travers un ou plusieurs orifices d'extrusion sous pression et solidification des objets moulés en cellulose dans un bain récepteur, la solution étant guidée, entre les orifices d'extrusion et le bain récepteur, en passant par une fente d'air, **caractérisé en ce que** la température de la solution au niveau des orifices d'extrusion est inférieure à 105 °C, et que la différence de pression entre la pression de la solution immédiatement avant l'extrusion et après l'extrusion dans la fente d'air est comprise entre 8 et 40 bar.

2. Procédé selon la revendication 1, **caractérisé en ce que** la température de la solution est comprise entre 80 °C et 98 °C, de préférence entre 84 °C et 96 °C.

3. Procédé selon la revendication 1 ou 2, **caractérisé en ce que** la différence de pression est comprise entre 16 bar et 38 bar, de préférence entre 20 bar et 35 bar.

4. Procédé selon l'une des revendications 1 à 3, **caractérisé en ce que** la pression, immédiatement avant l'extrusion, est comprise entre 13 et 50 bar.

5. Procédé selon l'une des revendications 1 à 3, **caractérisé en ce que** la pression, après l'extrusion dans la fente d'air, est comprise entre 0,5 bar et 3 bar, de préférence d'au moins 1 bar.

6. Procédé selon l'une des revendications 1 à 4, **caractérisé en ce qu'**un courant gazeux latéral est guidé dans la fente d'air.

7. Procédé selon la revendication 6, **caractérisé en ce que** le débit du courant gazeux est compris entre 30 et 300 litres/h de gaz par mm de longueur de la zone des orifices d'extrusion dans la direction du courant gazeux, ou entre 0,15 et 20 litres/h de gaz par mm³ de volume de champ de filature.

8. Procédé selon la revendication 6 ou 7, **caractérisé en ce que** la zone entre les orifices d'extrusion et le bain récepteur est pour l'essentiel entièrement balayée par le courant gazeux latéral.

9. Procédé selon l'une des revendications 6 à 8, **caractérisé en ce que** le courant gazeux latéral amené présente un écoulement laminaire.

10. Procédé selon l'une des revendications 6 à 9, **caractérisé en ce que** plusieurs orifices d'extrusion sont prévus dans la direction du courant gazeux latéral.

11. Procédé selon l'une des revendications 6 à 10, **caractérisé en ce qu'**un courant partiel du courant gazeux latéral est chauffé, de préférence par une plaque d'extrusion comportant des orifices d'extrusion et/ou par un élément chauffant dans une soufflante.

12. Procédé selon l'une des revendications 1 à 11, **caractérisé en ce que** les objets moulés en cellulose sont choisis parmi les filaments de cellulose, les fibres coupées de cellulose, les non-tissés de cellulose ou les feuilles de cellulose.

13. Procédé selon l'une des revendications 1 à 12, **caractérisé en ce qu'**on sépare de la solution extrudée un ou plusieurs composants favorisant la dissolution de la cellulose, de préférence à l'aide d'un courant gazeux latéral amené.

14. Procédé selon la revendication 13, **caractérisé en ce que** les composants séparés du courant gazeux latéral amené sont expulsés du champ de filature en aval.

15. Procédé selon la revendication 14, **caractérisé en ce que** les composants expulsés du champ de filature en aval sont cristallisables.
